# EUROPEAN PATENT APPLICATION

(11) **EP 0 737 421 A1**
(43) Date of publication of application: **16.10.1996**
(21) Application number: 95903916.5
(22) Date of filing: 21.12.1994
(51) Int. Cl.: A01N 37/50, A01N 43/72, A01N 43/34

(54) **BACTERICIDAL COMPOSITION**

(30) Priority: 27.12.1993 JP 333788/93; 27.12.1993 JP 333789/93; 18.04.1994 JP 78385/94
(71) Applicant: SUMITOMO CHEMICAL COMPANY LIMITED, Osaka-shi, Osaka 541 (JP)
(72) Inventor: OGURI, Yukio, Osaka 561 (JP)
(74) Representative: Brewster, Andrea Ruth
(86) International application number: JP9402165
(87) International publication number: WO9517818

(57) **Abstract**

A fungicidal composition containing as active ingredients a compound represented by the general formula: 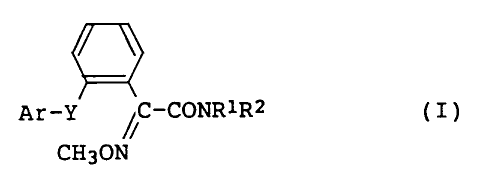 (wherein Ar is a substituted or unsubstituted phenyl group, Y is an oxygen atom, an oxymethylene group or a methyleneoxy group, and R₁ and R₂, which may be the same or different, are hydrogen atoms or lower alkyl groups) and at least one azole type fungicidal compound (e.g. Propiconazole) or cyclic amine type fungicidal compound (e.g. Fenpropimorph), which composition is effective in controlling a vast variety of plant diseases and has an excellent fungicidal effect due to the synergistic effect.

## Description

### TECHNICAL FIELD

The present invention relates to a fungicidal composition mainly for agricultural and horticultural use.

### BACKGROUND ART

Various agricultural and horticultural fungicides have been known, but there are a great variety of diseases to be controlled and it is difficult to specify the kind of the disease in practice and control the disease by choosing a fungicide suitable for the disease. In addition, it is necessary to cope with the occurrence of novel diseases due to the change of the mode of agricultural practice. For these reasons and the like, there is desired a fungicidal composition having a high activity and a wide antimicrobial spectrum.

### DISCLOSURE OF THE INVENTION

The present invention solves such problems and provides a fungicidal composition containing as active ingredients a compound represented by the general formula: 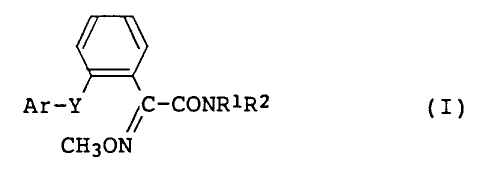 [wherein Ar is a substituted or unsubstituted phenyl group, Y is an oxygen atom, an oxymethylene group or a methyleneoxy group, and R₁ and R₂, which may be the same or different, are hydrogen atoms or lower alkyl groups (alkyl groups having 1 to 4 carbon atoms, such as methyl)] and at least one azole type fungicidal compound or cyclic amine type fungicidal compound.

### BEST MODE FOR CARRYING OUT THE INVENTION

The compound of the general formula (I) used in the present invention includes the compounds disclosed in Japanese Patent Unexamined Publication Nos. 63-23852, 3-246268 and 4-288045, etc. Meanwhile, the azole type fungicidal compound includes fungicidal compounds having a triazole ring or an imidazole ring, such as 1-[[2-(2,4-dichlorophenyl)-4-propyl-1,3-dioxolan-2-yl]methyl]-1H-1,2,4-triazole (Propiconazole), β-(4-chlorophenoxy)-α-(1,1-dimethylethyl)-1H-1,2,4-triazole-1-ethanol (Triadimenol), 1-N-propyl-N-[2-[2,4,6-(trichlorophenoxy)ethyl]carbamoyl]imidazole (Prochloraz), 1-[2-(2,4-dichlorophenyl)-n-pentyl]-1H-1,2,4-triazole (Penconazole), 1-(4-chlorophenyl)-4,4-dimethyl-3-[(1H-1,2,4-triazol-1-yl)methyl]pentan-3-ol (Tebuconazole), 1-[[bis(4-fluorophenyl)methylsilyl]-methyl]-1-H-1,2,4-triazole (Flusilazole), (E)-1-(2,4-dichlorophenyl)-4,4-dimethyl-2-(1H-1,2,4-triazol-1-yl)-1-penten-3-ol (Diniconazole), 4-bromo-2-(2,4-dichlorophenyl)-2-[(1H-1,2,4-triazol-1-yl)methyl]tetrahydrofuran (Bromoconazole), 3-(2-chlorophenyl)-2-(4-fluorophenyl)-2-[(1H-1,2,4-triazol-1-yl)methyl]oxylane (Epoxyconazole), 3-chloro-4-[4-methyl-2-[(1H-1,2,4-triazol-1-yl)methyl]-1,3-dioxalan-2-yl]phenyl 4-chlorophenyl ether (Difenoconazole), 2-(4-chlorophenyl)-3-cyclopropyl-1-(1H-1,2,4-triazol-1-yl)butan-2-ol (Cyproconazole), 1-(4-chlorophenyl)methyl-3,3-dimethyl-2-[(1H-1,2,4-triazol-1-yl)methyl]cyclopentan-2-ol (Metoconazole), (E)-4-chloro-α,α,α-trifluoro-N-[1-(imidazol-1-yl)-2-propoxyethylidene]-o-toluidine (Triflumizole), 2-(2,4-dichlorophenyl)-3-(1H-1,2,4-triazol-1-yl)propyl-1,1,2,2-tetrafluoroethyl ether (Tetraconazole), 2-(4-chlorophenyl)-2-[(1H-1,2,4-triazol-1-yl)methyl]hexanenitrile (Myclobutanil), 4-(4-chlorophenyl)-2-phenyl-2-[(1H-1,2,4-triazol-1-yl)methyl]butanenitrile (Fenbuconazole RH-7592), 2-(2,4-dichlorophenyl)-1(1H-1,2,4-triazol-1-yl)hexan-2-ol (Hexaconazole), 3-(2,4-dichlorophenyl)-6-fluoro-2-(1H-1,2,4-triazol-1-yl)-3,4-dihydroquinazolin-4-one (Fluquinconazole), 1-(4-chlorobenzylidene)-3,3-dimethyl-2-[(1H-1,2,4-triazol-1-yl)methyl]cyclopentan-2-ol (RPA400727), 3,3-dimethyl-1-(4-phenylphenoxy)-1-(1H-1,2,4-triazol-1-yl)butan-2-ol (Bitertanol), 1-[2-(2,4-dichlorophenyl)-2-(2-propenyloxy)ethyl]-1H-imidazole (Imazalil) and 2,4'-difluoro-α-[(1H-1,2,4-triazol-1-yl)methyl]benzhydryl alcohol (Flutriafol).

On the other hand, the cyclic amine type fungicidal compound includes fungicidal compounds such as 4-substituted 2,6-dimethylmorpholines, for example, 4-[3-(4-tert-butylphenyl)-2-methylpropyl]-2,6-dimethylmorpholine (Fenpropimorph) and 4-tridecyl-2,6-dimethylmorpholine (Tridemorph); and N-substituted piperidines, for example, N-[3-(4-tert-butylphenyl)-2-methylpropyl]piperidine (Fenpropidin).

In the compound of the general formula (I), the substituted or unsubstituted phenyl group represented by Ar refers to a phenyl group which may be substituted by one or more substituents selected from, for example, alkyl groups having 1 to 4 carbon atoms (e.g. methyl group and ethyl group), halogen atoms (e.g. chlorine atom and bromine atom), haloalkyl groups having 1 to 4 carbon atoms (e.g. trifluoromethyl group), alkoxy groups having 1 to 4 carbon atoms (e.g. methoxy group), haloalkoxy groups (e.g. trifluoromethoxy group) and cyano group.

Some specific examples of the compound of the general formula (I) are given below:
(Ia) N-methyl-α-methoxyimino-2-[(4-chloro-2-methylphenoxy)methyl]phenylacetamide 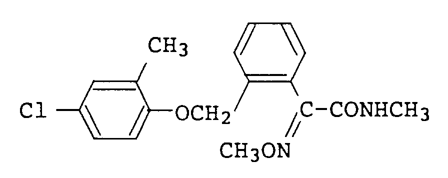
(Ib) N-methyl-α-methoxyimino-2-[(3-chlorophenoxy)methyl]phenylacetamide 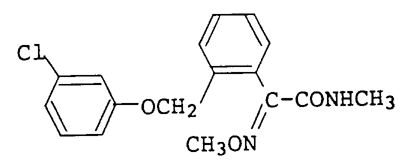
(Ic) N-methyl-α-methoxyimino-2-[2,4-dichlorophenoxy)methyl]phenylacetamide 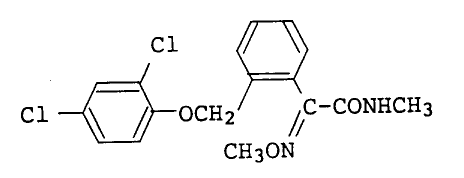
(Id) N-methyl-α-methoxyimino-2-[(2,5-dimethylphenoxy)methyl]phenylacetamide 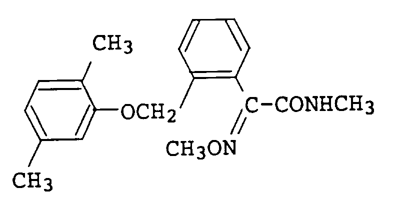
(Ie) N-methyl-α-methoxyimino-2-[(3-trifluoromethylphenoxy)methyl]phenylacetamide 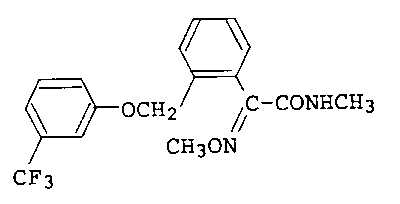
(If) N-methyl-α-methoxyimino-2-phenoxyphenylacetamide

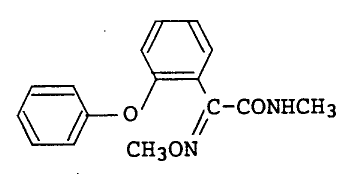

The fungicidal composition of the present invention can control a vast variety of plant diseases by virtue of the combination of the above-mentioned compound of the general formula (I) and azole type fungicidal compound(s) or cyclic amine type fungicidal compound(s), and is effective in controlling various plant diseases such as blast (Pyricularia oryzae), Helminthosporium leaf spot (Cochliobolus miyabeanus) and sheath blight (Rhizoctonia solani) of rice; powdery mildew (Erysiphe graminis f. sp. hordei, f. sp. tritici), scab (Gibberella zeae), rust (Puccinia striiformis, P. graminis, P. recondita, P. hordei), snow blight (Typhula sp., Micronectriella nivalis), loose smut (Ustilago tritici, U. nuda), bunt (Tilletia caries), eye spot (Pseudocercosporella herpotrichoides), foot rot (Rhizoctonia cerealis), scald (Rhynchosporium secalis), leaf blight (Septoria tritici) and glume blotch (Leptosphaeria nodorum) of barley, wheat, oats and rye; melanose (Diaporthe citri), scab (Elsinoe fawcetti), penicillium rot (Penicillium digitatum, P. italicum) of citrus; blossom blight (Sclerotinia mali), canker (Valsa mali), powdery mildew (Podosphaera leucotricha), Alternaria leaf spot (Alternaria mali) and scab (Venturia inaequalis) of apple; scab (Venturia nashicola), black spot (Alternaria kikuchiana) and rust (Gymnosporangium haraeanum) of pear; brown rot (Sclerotinia cinerea), scab (Cladosporium carpophilum) and Phomopsis rot (Phomopsis sp.) of peach; downy mildew (Plasmopara viticola), anthracnose (Elisinoe ampelina), ripe rot (Glomerella cingulata), powdery mildew (Uncinula necator) and rust (Phakopora ampelopsidis) of grape; anthracnose (Gloeosporium kaki) and leaf spot (Cercospora kaki, Mycosphaerella nawae) of Japanese persimmon; downy mildew (Pseudoperonospora cubensis); anthracnose (Colletotrichum lagenarium), powdery mildew (Sphaetotheca fuliginea) and gummy stem blight (Mycosphaerella melonis) of melons and cucumbers; early blight (Alternaria solani), leaf mold (Cladosporium fulvum) and late blight (Phytophthora infestans) of tomato; brown spot (Phomopsis vexans) and powdery mildew (Erysiphe cichoracearum) of eggplant; altenaria leaf spot (Alternaria japonica) and white spot (Cercosporella brassicae) of vegetables of Cruciferae; Welsh onion rust (Puccinia allii); purple stain (Cercospora kikuchii), Sphaceloma scab (Elisinoe glycines) and pod and stem blight (Diaporthe phaseolorum var. sajae) of soybean; kidney bean anthracnose (Colletotrichum lindemthianum); leaf spot (Mycosphaerella personatum, and Cercospora arachidicola) of peanut; powdery mildew (Erysiphe pisi) and downy mildew (Peronospora pisi) of pea; downy mildew (Peronospora viciae) and Phytophthora rot (Phytophthora nicotianae) of broad bean; early blight (Alternaria solani) and late blight (Phytophthora infestans) of potato; powdery mildew (Sphaerotheca humuli) and Phytophthora rot (Phytophthora nicotianae) of strawberry; net blister blight (Exobasidium recticulatum) and white scab (Erysiphe leucospila) of tea plant; brown spot (Alternaria longipes), powdery mildew (Erysiphe cichoracearum), anthracnose (Colletotrichum tabacum) and Phytophthora rot (Phytophthora parasitica) of tobacco; beet leaf spot (Cercospora beticola); black spot (Diplocarpon rosae), powdery mildew (Sphaerotheca pannosa) and Phytophthora rot (Phytophthora megasperma) of rose; leaf blight (Septoria chrysanthemi-indici) and white rust (Puccinia horiana) of chrysanthemum; and gray mold (Botrytis cinerea) and stem rot (Sclerotinia sclerotiorum) of various crops.

In the fungicidal composition of the present invention, although the mixing proportions of the compounds as active ingredients, i.e., the compound of the general formula (I) and the azole type fungicidal compound(s) or the cyclic amine type fungicidal compound(s) are not particularly limited, the proportion of the azole type fungicidal compound(s) or the cyclic amine type fungicidal compound(s) ranges usually from 0.01 to 100 parts by weight, preferably from 0.1 to 50 parts by weight, per part by weight of the compound of the general formula (I).

The fungicidal composition of the present invention is applied usually after being formulated into an emulsifiable concentrate, wettable powder, suspension, granules, dust, dry flowable concentrate, aqueous soluble concentrate, oil formulation, smoking formulation, aerosol, microcapsules or the like, by mixing with a solid carrier, liquid carrier or gaseous carrier and optionally addition of adjuvants for formulation such as surfactants, fixing agents, dispersants, stabilizers, etc.

The compounds as active ingredients are usually contained in such a formulation in a total amount of 0.1 to 99% by weight, preferably 0.2 to 90% by weight.

The solid carrier includes, for example, fine powders or granules of clays (e.g. kaolin clay, diatomaceous earth, synthetic hydrated silicon dioxide, attapulgite clay, bentonite and acid clay), talcs, other inorganic minerals (e.g. sericite, powdered quartz, powdered sulfur, activated carbon, calcium carbonate and hydrated silica), and salts for chemical fertilizers (e.g. ammonium sulfate, ammonium phosphate, ammonium nitrate, urea and ammonium chloride). The liquid carrier includes, for example, water, alcohols (e.g. methanol and ethanol), ketones (e.g. acetone, methyl ethyl ketone and cyclohexanone), aromatic hydrocarbons (e.g. benzene, toluene, xylene, ethylbenzene and methylnaphthalene), aliphatic hydrocarbons (e.g. hexane and kerosene), esters (e.g. ethyl acetate and butyl acetate), nitriles (e.g. acetonitrile and isobutyronitrile), ethers (e.g. dioxane and diisopropyl ether), acid amides (e.g. dimethylformamide and dimethylacetamide), and halogenated hydrocarbons (e.g. dichloroethane, trichloroethylene and carbon tetrachloride). The gaseous carrier includes butane gas, carbon dioxide, fluorocarbon gas, etc.

The surfactants include alkyl sulfates, alkylsulfonates, alkylarylsulfonates, alkyl aryl ethers and their polyoxyethylenated products, polyethylene glycol ethers, polyhydric alcohol esters, sugar alcohol derivatives, etc.

The fixing agents and dispersants include casein, gelatin, polysaccharides (e.g. starch, gum arabic, cellulose derivatives and alginic acid), lignin derivatives, bentonite, saccharides, synthetic water-soluble polymers [e.g. poly(vinyl alcohol)s, poly(vinylpyrrolidone)s and poly(acrylic acid)s], etc. The stabilizers include PAP (acidic isopropyl phosphate), BHT (2,6-di-tert-butyl-4-methylphenol), BHA (a mixture of 2-tert-butyl-4-methoxyphenol and 3-tert-butyl-4-methoxyphenol), vegetable oils, mineral oils, fatty acids or their esters, etc.

The above-mentioned formulations are applied to plants or soil as they are or after being diluted with water or the like. When applied to soil, they may be sprinkled on the soil surface or mixed with the soil. They may be applied also by any of various methods such as seed treatment, ULV, etc. When used as a seed-treating agent, the formulations are used by dressing of seeds, seed immersion or the like.

In addition, the formulations may be used in combination with other fungicides, insecticides, acaricides, nematicides, herbicides, seed disinfectants, fertilizers, soil conditioners, etc.

Although the applying dosage of the fungicidal composition of the present invention is varied depending on the kinds of the compounds used as active ingredients; their mixing proportions; weather conditions; type of formulation; application time, method and site; diseases to be controlled; a crop to be protected; and the like, it is usually 0.001 to 1000 g, preferably 0.1 to 100 g, per are. When the emulsifiable concentrate, wettable powder, suspension, soluble concentrate or the like is used after being diluted with water, the applying concentration thereof is 0.0001 to 1% by weight, preferably 0.001 to 0.5% by weight. The granules, dust and the like are used as they are without dilution.

For seed treatment, the fungicidal composition is used in an amount of usually 0.001 to 50 g, preferably 0.01 to 10 g, (in terms of the sum of the compounds used as active ingredients) per kg of seeds.

### EXAMPLES

The present invention is explained below in further detail with formulation examples and test examples, but the present invention is not limited to the following examples. In the following examples, parts and percents are all by weight unless otherwise specified.

### Formulation Example 1

Granules are obtained by thoroughly grinding and mixing 1 part of compound (Ia), (Ib), (Ic), (Id), (Ie) or (If), 5 parts of an azole type fungicidal compound, 1 part of synthetic hydrated silicon dioxide, 2 parts of calcium lignin sulfonate, 30 parts of bentonite and 61 parts of kaolin clay, and thoroughly kneading the resulting mixture together with water, followed by granulation and drying.

### Formulation Example 2

Granules are obtained by thoroughly grinding and mixing 5 parts of compound (Ia), (Ib), (Ic), (Id), (Ie) or (If), 5 parts of an azole type fungicidal compound, 1 part of synthetic hydrated silicon dioxide, 2 parts of calcium lignin sulfonate, 30 parts of bentonite and 57 parts of kaolin clay, and thorougly kneading the resulting mixture together with water, followed by granulation and drying.

### Formulation Example 3

A dust is obtained by thoroughly grinding and mixing 0.5 part of compound (Ia), (Ib), (Ic), (Id), (Ie) or (If), 2.5 parts of an azole type fungicidal compound, 86 parts of kaolin clay and 11 parts of talc.

### Formulation Example 4

A suspension is obtained by mixing 5 parts of compound (Ia), (Ib), (Ic), (Id), (Ie) or (If), 25 parts of an azole type fungicidal compound, 3 parts of polyoxyethylene sorbitan monooleate, 3 parts of carboxymethyl cellulose and 64 parts of water, followed by wet grinding to a particle size of 5 microns or less.

### Formulation Example 5

A wettable powder is obtained by thoroughly grinding and mixing 10 parts of compound (Ia), (Ib), (Ic), (Id), (Ie) or (If), 50 parts of an azole type fungicidal compound, 3 parts of calcium lignin sulfonate, 2 parts of sodium lauryl sulfate and 35 parts of synthetic hydrated silicon dioxide.

### Formulation Example 6

An emulsifiable concentrate is obtained by mixing 5 parts of compound (Ia), (Ib), (Ic), (Id), (Ie) or (If), 25 parts of an azole type fungicidal compound, 14 parts of polyoxyethylene styrylphenyl ether, 6 parts of calcium dodecylbenzenesulfonate and 50 parts of xylene.

### Formulation Example 7

Granules are obtained by thoroughly grinding and mixing 1 part of compound (Ia), (Ib), (Ic), (Id), (Ie) or (If), 5 parts of a cyclic amine type fungicidal compound, 1 part of synthetic hydrated silicon dioxide, 2 parts of calcium lignin sulfonate, 30 parts of bentonite and 61 parts of kaolin clay, and thoroughly kneading the resulting mixture together with water, followed by granulation and drying.

### Formulation Example 8

Granules are obtained by thoroughly grinding and mixing 5 parts of compound (Ia), (Ib), (Ic), (Id), (Ie) or (If), 5 parts of a cyclic amine type fungicidal compound, 1 part of synthetic hydrated silicon dioxide, 2 parts of calcium lignin sulfonate, 30 parts of bentonite and 57 parts of kaolin clay, and thorougly kneading the resulting mixture together with water, followed by granulation and drying.

### Formulation Example 9

A dust is obtained by thoroughly grinding and mixing 0.5 part of compound (Ia), (Ib), (Ic), (Id), (Ie) or (If), 2.5 parts of a cyclic amine type fungicidal compound, 86 parts of kaolin clay and 11 parts of talc.

### Formulation Example 10

A suspension is obtained by mixing 5 parts of compound (Ia), (Ib), (Ic), (Id), (Ie) or (If), 25 parts of a cyclic amine type fungicidal compound, 3 parts of polyoxyethylene sorbitan monooleate, 3 parts of carboxymethyl cellulose and 64 parts of water, followed by wet grinding to a particle size of 5 microns or less.

### Formulation Example 11

A wettable powder is obtained by thoroughly grinding and mixing 10 parts of compound (Ia), (Ib), (Ic), (Id), (Ie) or (If), 50 parts of a cyclic amine type fungicidal compound, 3 parts of calcium lignin sulfonate, 2 parts of sodium lauryl sulfate and 35 parts of synthetic hydrated silicon dioxide.

### Formulation Example 12

An emulsifiable concentrate is obtained by mixing 5 parts of compound (Ia), (Ib), (Ic), (Id), (Ie) or (If), 25 parts of a cyclic amine type fungicidal compound, 14 parts of polyoxyethylene styrylphenyl ether, 6 parts of calcium dodecylbenzenesulfonate and 50 parts of xylene.

### Test Example 1

Each of plastic pots was filled with sandy loam and sown with wheat (Norin No. 73), followed by growing in a greenhouse for 10 days. An emulsifiable concentrate prepared from one or two agents to be tested, according to Formulation Example 6 was diluted to a predetermined concentration with water, and foliage application of the dilution was carried out so as to adhere the dilution sufficiently to the surfaces of the leaves. After air-drying, the root of the wheat seedling was inoculated with a suspension of spores of wheat eye spots fungus. After the inoculation, the wheat seedling was grown in the dark at a high humidity for 14 days, and then the infection rate (%) was investigated.

The results are shown in Table 1.

**Table 1**

| Agent tested | Amount of agent applied (ppm) | Infection rate (%) |
|---|---|---|
| Compound (Ia) | 25 | 30 |
| Compound (Ia) | 50 | 40 |
| Compound (Ia) | 25 | 30 |
| Compound (Ia) | 10 | 30 |
| Prochloraz | 10 | 30 |
| Flusilazole | 10 | 30 |
| Compound (Ia) + Prochloraz | 25+10 | 0 |
| Compound (Ia) + Prochloraz | 50+10 | 0 |
| Compound (Ia) + Prochloraz | 25+10 | 0 |
| Compound (Ia) + Prochloraz | 10+10 | 0 |
| Compound (Ia) + Prochloraz | 10+10 | 0 |

### Test Example 2

Each of plastic pots was filled with sandy loam and sown with wheat (Norin No. 73), followed by growing in a greenhouse for 10 days. The wheat young seedling which had a developed second leaf was inoculated with spores of wheat powdery mildew fungus by sprinkling. After the inoculation, the young seedling was grown in a greenhouse at 23°C for 3 days. An emulsifiable concentrate prepared from one or two agents to be tested, according to Formulation Example 6 or 12 was diluted to a predetermined concentration with water, and foliage application of the dilution was carried out so as to adhere the dilution sufficiently to the surfaces of the leaves. After the application, the wheat seedling was grown in a greenhouse at 23°C for 6 days and the infection rate (%) was investigated.

The results are shown in Table 2.

**Table 2**

| Agent tested | Amount of agent applied (ppm) | Infection rate (%) |
|---|---|---|
| Compound (Ia) | 1 | 25 |
| Compound (Ib) | 3 | 20 |
| Compound (Ic) | 1 | 25 |
| Compound (Id) | 0.5 | 20 |
| Propiconazole | 1 | 30 |
| Triadimenol | 1 | 25 |
| Tebuconazole | 1 | 30 |
| Diniconazole | 1 | 10 |
| Tetraconazole | 1 | 20 |
| Fenbuconazole | 1 | 25 |
| Flutriafol | 1 | 25 |
| Fenpropinorph | 3 | 30 |
| Compound (Id)+Propiconazole | 0.5 + 1 | 0 |
| Compound (Ia)+Triadimenol | 1 + 1 | 0 |
| Compound (Ib)+Triadimenol | 3 + 1 | 0 |
| Compound (Ic)+Triadimenol | 1 + 1 | 0 |
| Compound (Id)+Triadimenol | 0.5 + 1 | 0 |
| Compound (Id)+Tebuconazole | 0.5 + 1 | 0 |
| Compound (Id)+Diniconazole | 0.5 + 1 | 0 |
| Compound (Id)+Tetraconazole | 0.5 + 1 | 0 |
| Compound (Id)+Fenbuconazole | 0.5 + 1 | 0 |
| Compound (Id)+Flutriafol | 0.5 + 1 | 0 |
| Compound (Ia)+Fenpropinorph | 1 + 3 | 0 |
| Compound (Ib)+Fenpropinorph | 3 + 3 | 0 |
| Compound (Ic)+Fenpropinorph | 1 + 3 | 0 |
| Compound (Id)+Fenpropinorph | 0.5 + 3 | 0 |

### Test Example 3

Each of plastic pots was filled with sandy loam and sown with cucumber (Sagamihanjiro), followed by growing in a greenhouse for 2 weeks. A wettable powder prepared from one or two agents to be tested, according to Formulation Example 5 was diluted to a predetermined concentration with water, and foliage application of the dilution was carried out so as to adhere the dilution sufficiently to the surfaces of leaves of the cucumber young seedling. After air-drying, the young seedling was inoculated with a suspension of spores of cucumber powdery mildew fungus by spraying. After the inoculation, the young seedling was grown in a greenhouse at 25°C for 14 days, and then the infection rate (%) was investigated.

The results are shown in Table 3.

**Table 3**

| Agent tested | Amount of agent applied (ppm) | Infection rate (%) |
|---|---|---|
| Compound (Ia) | 5 | 40 |
| Compound (Ib) | 5 | 40 |
| Compound (Ic) | 5 | 20 |
| Compound (Id) | 1 | 20 |
| Penconazole | 10 | 25 |
| Bromoconazole | 10 | 25 |
| Difenoconazole | 10 | 25 |
| Triflumizole | 20 | 30 |
| Myclobutanil | 10 | 25 |
| Hexaconazole | 10 | 25 |
| Fluquinconazole | 10 | 30 |
| Bitertanol | 20 | 30 |
| Imazalil | 20 | 30 |
| Compound (Ia)+Penconazole | 5+10 | 0 |
| Compound (Ib)+Penconazole | 5+10 | 0 |
| Compound (Ic)+Penconazole | 5+10 | 0 |
| Compound (Id)+Penconazole | 1+10 | 0 |
| Compound (Id)+Bromoconazole | 1+10 | 0 |
| Compound (Id)+Difenoconazole | 1+10 | 0 |
| Compound (Id)+Triflumizole | 1+20 | 0 |
| Compound (Id)+Myclobutanil | 1+10 | 0 |
| Compound (Id)+Hexaconazole | 1+10 | 0 |
| Compound (Id)+Fluquinconazole | 1+10 | 0 |
| Compound (Id)+Bitertanol | 1+20 | 0 |
| Compound (Id)+Imazalil | 1+20 | 0 |

### Test Example 4

Each of plastic pots was filled with sandy loam and sown with wheat (Norin No. 73), followed by growing in a greenhouse for 10 days. A suspension prepared from one or two agents to be tested, according to Formulation Example 4 was diluted to a predetermined concentration with water, and foliage application of the dilution was carried out so as to adhere the dilution sufficiently to the surfaces of leaves of the wheat young seedling which had put out a second leaf. After air-drying, the young seedling was inoculated with spores of wheat leaf rust fungus by sprinkling. After the inoculation, the young seedling was allowed to stand in the dark at 23°C and a high humidity for 24 hours and then grown under illumination for 10 days, after which the infection rate (%) was investigated.

The results are shown in Table 4.

**Table 4**

| Agent tested | Amount of agent applied (ppm) | Infection rate (%) |
|---|---|---|
| Compound (Ia) | 3 | 20 |
| Compound (Ib) | 5 | 25 |
| Compound (Id) | 1 | 20 |
| Epoxyconazole | 0.5 | 10 |
| Cyproconazole | 0.5 | 20 |
| Metoconazole | 1 | 10 |
| RP400727 | 5 | 20 |
| Compound (Ia)+Epoxyconazole | 3+0.5 | 0 |
| Compound (Ib)+Epoxyconazole | 5+0.5 | 0 |
| Compound (Id)+Epoxyconazole | 1+0.5 | 0 |
| Compound (Id)+Cyproconazole | 1+0.5 | 0 |
| Compound (Id)+Metoconazole | 1+1 | 0 |
| Compound (Id)+RP400727 | 1+5 | 0 |

### Test Example 5

Each of plastic pots was filled with sandy loam and sown with wheat (Norin No. 73), followed by growing in a greenhouse for 10 days. An emulsifiable concentrate prepared from one or two agents to be tested, according to Formulation Example 12 was diluted to a predetermined concentration with water, followed by foliage application of the dilution to the wheat young seedling which had put out a second leaf. After air-drying, the young seedling was inoculated with spores of wheat powdery mildew fungus and grown in a greenhouse at 23°C for 10 days, and then the infection rate (%) was investigated.

The results are shown in Table 5.

**Table 5**

| Agent tested | Amount of agent applied (ppm) | Infection rate (%) |
|---|---|---|
| Compound (Ia) | 1 | 25 |
| Compound (Ib) | 3 | 20 |
| Compound (Ic) | 1 | 25 |
| Compound (Id) | 0.5 | 20 |
| Fenpropimorph | 3 | 25 |
| Compound (Ia)+Fenpropimorph | 1+3 | 0 |
| Compound (Ib)+Fenpropimorph | 3+3 | 0 |
| Compound (Ic)+Fenpropimorph | 1+3 | 0 |
| Compound (Id)+Fenpropimorph | 0.5+3 | 0 |

### Test Example 6

Each of plastic pots was filled with sandy loam and sown with wheat (Norin No. 73), followed by growing in a greenhouse for 10 days. An emulsifiable concentrate prepared from one or two agents to be tested, according to Formulation Example 6 was diluted to a predetermined concentration with water, and foliage application of the dilution was carried out so as to adhere the dilution sufficiently to the surfaces of the leaves. After air-drying, the wheat seedling was inoculated with spores of wheat leaf rust fungus, allowed to stand in the dark at 23°C and a high humidity for 24 hours, and then grown under illumination at 23°C for 6 days, after which the infection rate (%) was investigated.

The results are shown in Table 6.

**Table 6**

| Agent tested | Amount of agent applied (ppm) | Infection rate (%) |
|---|---|---|
| Compound (Ia) | 20 | 20 |
| Compound (Ib) | 5 | 30 |
| Compound (Ic) | 20 | 25 |
| Compound (Id) | 1.5 | 25 |
| Fenpropimorph | 50 | 20 |
| Compound (Ia)+Fenpropimorph | 20+50 | 0 |
| Compound (Ib)+Fenpropimorph | 5+50 | 0 |
| Compound (Ic)+Fenpropimorph | 20+50 | 0 |
| Compound (Id)+Fenpropimorph | 1.5+50 | 0 |

Since the fungicidal composition of the present invention is effective in controlling a vast variety of plant diseases and has an excellent fungicidal effect due to the synergistic effect, it is useful as a fungicide.

## Claims

1. A fungicidal composition containing as active ingredients a compound represented by the general formula: 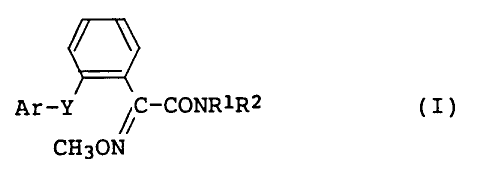 (wherein Ar is a substituted or unsubstituted phenyl group, Y is an oxygen atom, an oxymethylene group or a methyleneoxy group, and R₁ and R₂, which may be the same or different, are hydrogen atoms or lower alkyl groups) and at least one compound selected from azole type fungicidal compounds or cyclic amine type fungicidal compounds.

2. A fungicidal composition according to claim 1, wherein the azole type fungicidal compounds are fungicidal compounds containing a triazole ring or an imidazole ring.

3. A fungicidal composition according to claim 1, wherein the azole type fungicidal compound is selected from the group consisting of Propiconazole, Triadimenol, Prochloraz, Penconazole, Tebuconazole, Flusilazole, Diniconazole, Bromoconazole, Epoxyconazole, Difenoconazole, Cyproconazole, Metoconazole, Triflumizole, Tetraconazole, Myclobutanil, Fenbuconazole, Hexaconazole, Fluquinconazole, RPA400727, Bitertanol, Imazalil and Flutriafol.

4. A fungicidal composition according to claim 1, wherein the cyclic amine type fungicidal compound is selected from the group consisting of 4-substituted 2,6-dimethylmorpholines and N-substituted piperidines.

5. A fungicidal composition according to claim 1, wherein the cyclic amine type fungicidal compound is selected from the group consisting of Fenpropimorph, Tridemorph and Fenpropidin.
